# EUROPÄISCHE PATENTSCHRIFT

(11) **EP 2 525 072 B1**
(45) Veröffentlichungstag und Bekanntmachung des Hinweises auf die Patenterteilung: **01.01.2014**
(21) Anmeldenummer: 11166155.9
(22) Anmeldetag: 16.05.2011
(51) Int. Cl.: F02M 25/07, F02M 31/13, F02M 35/112, F02N 19/00, F02M 35/10

(54) **Verfahren zur Erwärmung der Verbrennungsluft einer Brennkraftmaschine und Brennkraftmaschine zur Durchführung eines derartigen Verfahrens**
Method of heating up the intake air of an internal combustion engine and internal combustion engine suitable to coduct such a method
Procédé de chauffage de l'air de combustion d'un moteur à combustion interne et moteur à combustion interne destiné à l'exécution d'un tel procédé

(43) Veröffentlichungstag der Anmeldung: 21.11.2012
(73) Patentinhaber: Ford Global Technologies, LLC, Dearborn, MI 48126 (US)
(72) Erfinder: Kuske, Andreas, 6243 CM, Geulle (NL); Roettger, Daniel, 4731, Eynatten (BE); Vigild, Christian Winge, 52457, Aldenhoven (DE)
(74) Vertreter: Drömer, Hans-Carsten

(56) Entgegenhaltungen:
- DE-A1- 10 332 936
- US-A- 4 685 437
- US-A1- 2006 150 959

## Beschreibung

Die Erfindung betrifft ein Verfahren zum Betreiben einer Brennkraftmaschine mit mindestens einem Zylinderkopf und mindestens zwei Zylindern, bei der jeder Zylinder mindestens eine Einlaßöffnung zum Zuführen von Verbrennungsluft in den Zylinder aufweist, wobei
- zu jeder Einlaßöffnung eine Ansaugleitung führt,
- die Ansaugleitungen von mindestens zwei Zylindern zu einer Gesamtansaugleitung zusammenführen, und
- in der Gesamtansaugleitung eine Heizvorrichtung zur Erwärmung der Verbrennungsluft angeordnet ist.

Des Weiteren betrifft die Erfindung eine Brennkraftmaschine zur Durchführung eines derartigen Verfahrens.

Im Rahmen der vorliegenden Erfindung umfaßt der Begriff Brennkraftmaschine insbesondere Ottomotoren, aber auch Dieselmotoren und Hybrid-Brennkraftmaschinen.

Brennkraftmaschinen verfügen über einen Zylinderblock und mindestens einen Zylinderkopf, die zur Ausbildung der Zylinder miteinander verbunden werden. Um den Ladungswechsel zu steuern, benötigt eine Brennkraftmaschine Steuerorgane - in der Regel in Gestalt von Ventilen - und Betätigungseinrichtungen zur Betätigung dieser Steuerorgane. Der für die Bewegung der Ventile erforderliche Ventilbetätigungsmechanismus einschließlich der Ventile selbst wird als Ventiltrieb bezeichnet. Häufig dient der Zylinderkopf zur Aufnahme des Ventiltriebs.

Im Rahmen des Ladungswechsels erfolgt das Ausschieben der Verbrennungsgase über die Auslaßöffnungen der Zylinder und das Füllen der Brennräume, d. h. das Ansaugen der Verbrennungsluft über die Einlaßöffnungen. Ist die Brennkraftmaschine mit einer Abgasrückführung ausgestattet, kann die Verbrennungsluft neben der aus der Umgebung angesaugten Frischluft auch Abgas enthalten. Wird der Kraftstoff nicht direkt in die Zylinder eingespritzt, sondern beispielsweise stromaufwärts der Zylinder in den Ansaugtrakt eingebracht, wird nicht nur die Verbrennungsluft, sondern vielmehr auch der Kraftstoff den Zylindern via Einlaßöffnungen zugeführt.

Es ist die Aufgabe des Ventiltriebes die Einlaß- und Auslaßöffnungen rechtzeitig freizugeben bzw. zu schließen, wobei eine schnelle Freigabe möglichst großer Strömungsquerschnitte angestrebt wird, um die Drosselverluste in den ein- bzw. ausströmenden Gasströmungen gering zu halten und eine möglichst gute Füllung der Zylinder mit Frischgemisch bzw. ein effektives, d. h. vollständiges Abführen der Abgase zu gewährleisten.

Die Ansaugleitungen, die zu den Einlaßöffnungen führen, sind nach dem Stand der Technik zumindest teilweise im Zylinderkopf integriert und werden in der Regel unter Ausbildung mindestens eines sogenannten Einlaßkrümmers zusammengeführt; häufig zu einer einzelnen Gesamtansaugleitung.

An den Einlaßbereich einer Brennkraftmaschine werden unterschiedliche Anforderungen gestellt. So wird unter anderem eine Anordnung und Ausbildung der Ansaugleitungen angestrebt, die zu einem möglichst geringen Druckverlust in der angesaugten Verbrennungsluft führt, um eine gute Füllung der Zylinder mit Frischgemisch zu gewährleisten.

Die Geometrie einer Ansaugleitung hat zudem Einfluß auf die Ladungsbewegung im Zylinder und damit auf die Gemischbildung, insbesondere bei direkteinspritzenden Brennkraftmaschinen. Häufig werden die Ansaugleitungen daher im Hinblick auf die Erzeugung eines sogenannten Tumbles oder einer Drallströmung ausgebildet, die die Gemischbildung beschleunigen und unterstützen sollen, wobei ein Tumble ein Luftwirbel um eine gedachte Achse ist, die parallel zur Längsachse der Kurbelwelle verläuft, und ein Drall einen Luftwirbel bezeichnet, dessen Achse parallel zur Kolben- bzw. Zylinderlängsachse verläuft.

Während des Ladungswechsels variiert der Druck entlang des Strömungsweges im Ansaugkanal. Derartige lokale Druckschwankungen breiten sich in gasförmigen Medien als Wellen aus. Um diese dynamischen Wellenvorgänge für die Optimierung des Ladungswechsels nutzbar zu machen, kann beispielsweise der Einlaßbereich in der Art ausgelegt werden, dass gegen Ende des Ansaugtaktes an den Einlaßöffnungen eine

Überdruckwelle ankommt, die zu einer Verdichtung und damit zu einem gewissen Nachladeeffekt führt. Zielführend sind dabei in der Länge variable Ansaugleitungen.

In die Ansaugleitung bzw. Gesamtansaugleitung kann eine Vielzahl von zusätzlichen Leitungen einmünden, beispielsweise die Rückführleitung einer Abgasrückführung oder die Bypaßleitung eines Ladeluftkühlers bzw. eines Verdichters.

Darüber hinaus können Brennkraftmaschinen mit einer Heizvorrichtung ausgestattet werden, die im Einlaßbereich, d. h. Ansaugbereich, angeordnet ist und der Erwärmung der Ansaugluft dient. Eine Brennkraftmaschine, bei der in der Gesamtansaugleitung eine Heizvorrichtung angeordnet ist, ist auch Gegenstand der vorliegenden Erfindung.

Eine für den Einsatz bei Brennkraftmaschinen geeignete Heizvorrichtung wird beispielsweise in der deutschen Offenlegungsschrift DE 102 14 166 A1 und in der europäischen Patentschrift EP 0 793 399 B1 beschrieben.

Diese aus dem Stand der Technik bekannten Heizvorrichtungen umfassen bandförmige Heizelemente, die elektrisch beheizbar sind und einen in der Grundform rechteckigen Querschnitt aufweisen. Die bandförmigen Heizelemente werden in der Weise im Einlaßbereich angeordnet, dass ihr rechteckförmiger Querschnitt für die angesaugte Verbrennungsluft einen möglichst kleinen Widerstand darstellt. Mit einer ersten schmalen Seite des Querschnitts sind die bandförmigen Heizelemente der angesaugten Verbrennungsluftströmung zugewandt, wohingegen die langen Seiten des rechteckförmigen Querschnitts sich in Strömungsrichtung erstrecken, so dass die angesaugte Verbrennungsluft tangential über die größeren Längsseiten strömt. Eine derartige Ausrichtung des Querschnitts ist strömungstechnisch günstig, aber auch im Hinblick auf den Wärmeübergang infolge Konvektion vorteilhaft.

Gemäß der DE 198 54 077 A1 kann die Heizvorrichtung grundsätzlich auch stromabwärts eines gegebenenfalls im Ansaugbereich vorgesehenen Ladeluftkühlers angeordnet werden. Im Weiteren behandelt der vorstehend genannte Stand der Technik den Aufbau der Heizvorrichtung, insbesondere den als Aufnahme bzw. Rahmen dienenden Flansch, sowie die Ausbildung der bandförmigen Heizelemente und die hierzu verwendeten Werkstoffe bzw. Werkstoffmischungen.

Das Erwärmen der Ansaugluft kann unterschiedliche Zielsetzungen haben, beispielsweise die Verkürzung der Warmlaufphase nach einem Kaltstart, wie in der DE 198 54 077 A1, und in der DE /03 32 936 A1 beschrieben.

Die deutsche Offenlegungsschrift DE 10 2006 030 464 A1 nutzt das Anwärmen der Ansaugluft bei großvolumigen Dieselmotoren auch außerhalb der Start- und Warmlaufphase, um bei der Verwendung von Kraftstoff mit niedriger Cetanzahl im Leerlauf Zündaussetzer zu vermeiden. Darüber hinaus wird das Heizelement während der Regeneration des Partikelfilters zugeschaltet, ebenso wenn das Motordrehmoment und die Motordrehzahl einen vorgegebenen Mindestwert unterschreiten.

Vor dem Hintergrund des oben Gesagten ist es eine Aufgabe der vorliegenden Erfindung, ein Verfahren gemäß dem Oberbegriff des Anspruchs 1 aufzuzeigen, welches den Anwendungsbereich der Heizvorrichtung zur Erwärmung der Verbrennungsluft erweitert.

Eine weitere Teilaufgabe der vorliegenden Erfindung ist es, eine Brennkraftmaschine zur Durchführung eines derartigen Verfahrens bereitzustellen.

Gelöst wird die erste Teilaufgabe durch ein Verfahren zum Betreiben einer Brennkraftmaschine mit mindestens einem Zylinderkopf und mindestens zwei Zylindern, bei der jeder Zylinder mindestens eine Einlaßöffnung zum Zuführen von Verbrennungsluft in den Zylinder aufweist, wobei
- zu jeder Einlaßöffnung eine Ansaugleitung führt,
- die Ansaugleitungen von mindestens zwei Zylindern zu einer Gesamtansaugleitung zusammenführen, und
- in der Gesamtansaugleitung eine Heizvorrichtung zur Erwärmung der Verbrennungsluft angeordnet ist,
das dadurch gekennzeichnet ist, dass
- die Heizvorrichtung zur Erwärmung der Verbrennungsluft aktiviert wird, wenn die Kraftstoffzufuhr der Brennkraftmaschine deaktiviert ist.

Wird die Kraftstoffzufuhr deaktiviert, fehlt die bei der Verbrennung durch die exotherme, chemische Umwandlung des Kraftstoffes freigesetzte Wärme, um die Brennkraftmaschine auf Betriebstemperatur zu halten.

Daher ist es vorteilhaft, die Heizvorrichtung zur Erwärmung der Verbrennungsluft zu aktivieren, wenn die Kraftstoffzufuhr der Brennkraftmaschine deaktiviert wird. Dies führt zu einer Verbesserung des Emissionsverhaltens und zu einer Verringerung des Kraftstoffverbrauchs.

Zu berücksichtigen ist in diesem Zusammenhang, dass eine Aufheizung der Brennkraftmaschine mittels vorerwärmter Ansaugluft nicht nur der Aufrechterhaltung der Betriebstemperatur, sondern auch der Aufrechterhaltung der Temperatur des Motoröls dient. Die damit verbundene niedrige Viskosität des Öls bedingt eine geringe Reibung bzw. Reibleistung, insbesondere in den mit Öl versorgten Lagern. Ein Effekt der sich vorteilhaft auf den Kraftstoffverbrauch auswirkt.

Das erfindungsgemäße Verfahren erweitert den Anwendungsbereich der Heizvorrichtung zur Erwärmung der Verbrennungsluft und löst damit die erste der Erfindung zugrunde liegende Aufgabe.

Weitere vorteilhafte Verfahrensvarianten werden im Zusammenhang mit den Unteransprüchen erörtert.

Vorteilhaft sind Ausführungsformen des Verfahrens, bei denen die Heizvorrichtung zur Erwärmung der Verbrennungsluft aktiviert wird, wenn die Kraftstoffzufuhr der Brennkraftmaschine für eine vorgebbare Zeitspanne *Δt₁* deaktiviert ist.

Die Einführung einer zusätzlichen Bedingung für das Aktivieren der Heizvorrichtung soll ein zu häufiges An- und Abschalten der Heizvorrichtung verhindern, insbesondere ein Aktivieren der Heizvorrichtung, wenn die Kraftstoffzufuhr nur kurzzeitig deaktiviert wird, ohne dass ein Erwärmen der Ansaugluft mittels Heizvorrichtung erforderlich wäre, beispielsweise während eines nur kurzweiligen Schubbetriebs.

Vorteilhaft sind Ausführungsformen des Verfahrens, bei denen die Heizvorrichtung zur Erwärmung der Verbrennungsluft elektrisch betrieben wird.

Vorteilhaft sind Ausführungsformen des Verfahrens, bei denen die Heizvorrichtung zur Erwärmung der Verbrennungsluft mit im Schubbetrieb der Brennkraftmaschine zurückgewonnener Energie betrieben wird. Auf diese Weise wird die Bordbatterie des Fahrzeuges entlastet bzw. nicht zusätzlich belastet, d. h. nicht durch die Heizvorrichtung im Schubbetrieb entladen.

Die zweite der Erfindung zugrunde liegende Teilaufgabe, nämlich eine Brennkraftmaschine zur Durchführung eines Verfahrens einer zuvor beschriebenen Art bereitzustellen, wird gelöst durch eine Brennkraftmaschine mit mindestens einem Zylinderkopf und mindestens zwei Zylindern, bei der jeder Zylinder mindestens eine Einlaßöffnung zum Zuführen von Verbrennungsluft in den Zylinder aufweist, wobei
- zu jeder Einlaßöffnung eine Ansaugleitung führt,
- die Ansaugleitungen von mindestens zwei Zylindern zu einer Gesamtansaugleitung zusammenführen, und
- in der Gesamtansaugleitung eine Heizvorrichtung angeordnet ist.

Das bereits für das erfindungsgemäße Verfahren Gesagte gilt auch für die erfindungsgemäße Brennkraftmaschine, weshalb auf die entsprechenden Ausführungen Bezug genommen wird.

Vorteilhaft sind Ausführungsformen der Brennkraftmaschine, bei denen
die Ansaugleitungen von mindestens zwei Zylindern unter Ausbildung eines Verteilerknotenpunktes zu einer Gesamtansaugleitung zusammenführen, und
die Heizvorrichtung benachbart zu dem Verteilerknotenpunkt angeordnet ist, in dem die Ansaugleitungen zu der Gesamtansaugleitung zusammenführen, wobei der Abstand Δ zwischen der Heizvorrichtung und dem Verteilerknotenpunkt kleiner ist als der Durchmesser *d* eines Zylinders mit Δ < *d*.

Bei dieser Ausführungsform der Brennkraftmaschine ist die Heizvorrichtung möglichst nahe an den Einlaßöffnungen der Zylinder angeordnet, nämlich benachbart zu dem Verteilerknotenpunkt eines Einlaßkrümmers, an dem die einzelnen Ansaugleitungen zu den mindestens zwei Zylindern abzweigen. Diese Anordnung unterstützt die Heizvorrichtung in ihrer Funktion, nämlich den Zylindern vorerwärmte Verbrennungsluft zur Verfügung zu stellen, d. h. zu zuführen.

Durch die Anordnung der Heizvorrichtung nahe am Verteilerknotenpunkt wird der Weg der vorerwärmten Verbrennungsluft zu den Zylindern weitestgehend verkürzt. Damit wird der vorerwärmten Verbrennungsluft möglichst wenig Wegstrecke und Zeit zur Abkühlung eingeräumt. Die thermische Trägheit des Teilstücks der Ansaugleitungen zwischen der Einlaßöffnung am Zylinder und der Heizvorrichtung wird minimiert und zwar durch Reduzierung der Masse und der Länge dieses Teilstückes.

Diese Maßnahme stellt sicher, dass die Verbrennungsluft bei Eintritt in die Zylinder eine möglichst hohe Temperatur aufweist, wodurch eine möglichst große Wärmemenge in die Zylinder eingetragen wird.

Vorteilhaft sind Ausführungsformen der Brennkraftmaschine, bei denen die Ansaugleitungen von mindestens zwei Zylindern unter Ausbildung eines Einlaßkrümmers innerhalb des mindestens einen Zylinderkopfes zu einer Gesamtansaugleitung zusammenführen. Die Integration des Einlaßkrümmers in den Zylinderkopf verkürzt die Ansaugleitungen weiter und damit die thermische Trägheit des Teilstücks der Ansaugleitungen zwischen dem Zylindereinlaß und der Heizvorrichtung. Diese Maßnahme gestattet darüber hinaus ein dichtes Packaging der Antriebseinheit und verringert die Anzahl an Bauteilen und damit die Montage- und Bereitstellungskosten.

Nichtsdestotrotz können Ausführungsformen der Brennkraftmaschine vorteilhaft sein, bei denen die Ansaugleitungen von mindestens zwei Zylindern außerhalb des mindestens einen Zylinderkopfes zu einer Gesamtansaugleitung zusammenführen und einen externen Einlaßkrümmer ausbilden.

Im Gegensatz zu den aus dem Stand der Technik bekannten Konzepten ermöglicht die nahe Anordnung der Heizvorrichtung an den Zylindern die Verwendung der Heizvorrichtung als Leitvorrichtung für die Verbrennungsluft zum Zwecke einer gleichmäßigen Verteilung der angesaugten Verbrennungsluft auf die einzelnen Zylinder.

Eine erfindungsgemäße Brennkraftmaschine kann auch zwei Zylinderköpfe aufweisen, beispielsweise, wenn mehrere Zylinder auf zwei Zylinderbänke verteilt angeordnet sind.

Es müssen nicht die Ansaugleitungen sämtlicher Zylinder eines Zylinderkopfes zu einer Gesamtansaugleitung zusammenführen, sondern nur die Ansaugleitungen von mindestens zwei Zylindern.

Vorteilhaft sind aber auch Ausführungsformen, bei denen die Ansaugleitungen sämtlicher Zylinder des mindestens einen Zylinderkopfes zu einer Gesamtansaugleitung zusammenführen.

Die Ansaugleitungen können auch unter Ausbildung von zwei Verteilerknotenpunkten zu zwei Gesamtansaugleitungen zusammenführen, wenn mehr als zwei Zylinder und/oder mehr als eine Einlaßöffnung je Zylinder vorgesehen sind. Gegebenenfalls sind dann zwei Heizvorrichtungen vorzusehen.

Vorteilhaft sind Ausführungsformen der Brennkraftmaschine, bei denen der Abstand Δ zwischen der Heizvorrichtung und dem Verteilerknotenpunkt kleiner ist als der halbe Durchmesser *d* eines Zylinders mit Δ < 0.5*d.*

Vorteilhaft sind insbesondere Ausführungsformen der Brennkraftmaschine, bei denen der Abstand Δ zwischen der Heizvorrichtung und dem Verteilerknotenpunkt kleiner ist als ein Viertel des Durchmesser *d* eines Zylinders mit Δ < 0.25*d*.

Die zusätzliche Verkürzung des Abstandes Δ zwischen der Heizvorrichtung und dem Verteilerknotenpunkt gemäß den beiden vorstehend genannten Ausführungsformen trägt dazu bei, die Wegstrecke zu den Zylindern für die vorerwärmte Verbrennungsluft weiter zu verkürzen, d. h. die thermische Trägheit des Teilstücks der Ansaugleitungen zwischen dem Zylindereinlaß und der Heizvorrichtung zu vermindern.

Als Abstand Δ zwischen der Heizvorrichtung und dem Verteilerknotenpunkt wird im Rahmen der vorliegenden Erfindung die Wegstrecke zwischen dem Austritt aus der Heizvorrichtung und der Mitte des Verteilerknotenpunktes, in dem sich die mittleren Stromfäden der Ansaugleitungen treffen, bezeichnet.

Vorteilhaft sind Ausführungsformen der Brennkraftmaschine, bei denen
die Heizvorrichtung mindestens ein bandförmiges Heizelement aufweist, welches mit einer ersten schmalen Seite des Querschnitts der angesaugten Verbrennungsluftströmung zugewandt ist.

Bandförmige Heizelemente ermöglichen die Verwendung der Heizvorrichtung als Leitvorrichtung zur gleichmäßigen Verteilung der angesaugten Verbrennungsluft auf die einzelnen Zylinder.

Vorteilhaft sind dabei Ausführungsformen der Brennkraftmaschine, bei denen die erste schmale Seite des Querschnitts des mindestens einen bandförmigen Heizelementes im Wesentlichen senkrecht zu der angesaugten Verbrennungsluftströmung steht.

Bei Brennkraftmaschinen, bei denen die mindestens zwei Zylinder entlang der Längsachse des mindestens einen Zylinderkopfes in Reihe angeordnet sind, sind Ausführungsformen vorteilhaft, die dadurch gekennzeichnet sind, dass das mindestens eine bandförmige Heizelement im Wesentlichen horizontal entlang einer Parallelen zur Längsachse, vorzugsweise parallel zur Längsachse, des mindestens einen Zylinderkopfes ausgerichtet ist.

Untersuchungen haben gezeigt, dass eine horizontale Ausrichtung der Heizelemente hinsichtlich der Verteilung der angesaugten Verbrennungsluft auf die einzelnen Zylinder vorteilhaft ist und auch Vorteile hinsichtlich des Füllungsgrades bietet.

Bei Brennkraftmaschinen der in Rede stehenden Art, bei der die mindestens zwei Zylinder entlang der Längsachse des mindestens einen Zylinderkopfes in Reihe angeordnet sind, sind insbesondere Ausführungsformen vorteilhaft, die dadurch gekennzeichnet sind, dass das mindestens eine bandförmige Heizelement im Wesentlichen vertikal quer, vorzugsweise senkrecht, zu einer Parallelen der Längsachse des mindestens einen Zylinderkopfes ausgerichtet ist.

Eine derartige Ausrichtung der bandförmigen Heizelemente ist besonders geeignet, um die Heizelemente als Leiteinrichtung für die erwärmte Luftströmung auszubilden bzw. zu nutzen. Mit einer solchen Leiteinrichtung kann die angesaugte Verbrennungsluft in vorteilhafter Weise geführt und gelenkt werden, in der Art, dass eine gleichmäßige Verteilung der Luft auf die einzelnen Zylinder erfolgt. Eine gleichmäßige Füllung der Zylinder mit Frischgemisch wird angestrebt. Dadurch verbessert sich das Betriebsverhalten der Brennkraftmaschine, insbesondere im Hinblick auf die Schadstoffemissionen, den Kraftstoffverbrauch und die verfügbare Leistung.

Vorteilhaft sind Ausführungsformen der Brennkraftmaschine, bei denen sich das mindestens eine bandförmige Heizelement zu einer ersten schmalen Stirnseite hin, die der angesaugten Verbrennungsluftströmung zugewandt ist, verjüngt.

Es ergeben sich strömungstechnische Vorteile. Dadurch, dass sich die Heizelemente entgegengesetzt zur Strömungsrichtung verjüngen, werden beim Auftreffen der Luftströmung auf die Heizvorrichtung weniger Turbulenzen erzeugt. Zudem verengt sich der Strömungsquerschnitt der Gesamtansaugleitung nicht sprunghaft, sondern kontinuierlich, wodurch die Einschnürung der Luftteilströmungen nicht schlagartig erfolgt. Dabei schneiden die Heizelemente messerartig in die sie anströmende Luft ein. Der Widerstand, den die Heizvorrichtung der Luftströmung entgegensetzt, wird durch die beschriebene Ausbildung des mindestens einen bandförmigen Heizelementes verkleinert, wodurch auch der sich über die Heizvorrichtung einstellende Druckverlust verringert wird. Mit der in Rede stehenden Ausführungsform wird einer Verschlechterung des Füllungsgrades infolge der Heizvorrichtung entgegen gewirkt.

Vorteilhaft sind auch aus den vorstehend genannten Gründen Ausführungsformen der Brennkraftmaschine, bei denen sich eine erste schmale Stirnseite des mindestens einen bandförmigen Heizelementes, die der angesaugten Verbrennungsluftströmung zugewandt ist, verjüngt.

In diesem Zusammenhang muß zudem berücksichtigt werden, dass moderne Brennkraftmaschinen zunehmend mit einer Abgasrückführung ausgestattet werden, mit der Abgas in den Ansaugbereich zurückgeführt wird. Häufig wird das rückzuführende Abgas gekühlt, bevor es in den Ansaugbereich eingeleitet wird. Dies kann im Hinblick auf die Heizvorrichtung problematisch sein, wenn das Abgas stromaufwärts der Heizvorrichtung in den Ansaugbereich eingeleitet wird.

Unter Umständen wird dem Abgasmassenstrom bei der Kühlung so viel Wärme entzogen, dass einzelne Abgasbestandteile aus dem heißen Abgas auskondensieren und sich in der Heizvorrichtung ablagern. Die auskondensierten Abgasbestandteile können eine klebrige, mit zunehmender Betriebsdauer anwachsende Schicht auf der Oberfläche der Heizelemente aufbauen, an der schließlich auch die festen Bestandteile des Abgasmassenstromes bei Berührung hängen bleiben, insbesondere im Abgas befindliche Rußpartikel. Die Ablagerungen führen zu einem verengten Strömungsquerschnitt, gegebenenfalls zu einem vollständigen Verschluß der Gesamtansaugleitung und verschlechtern den Wärmeübergang vom Heizelement auf die angesaugte Luft. Eine Verengung des Strömungsquerschnittes des Ansaugkanals ist zudem mit einem Druckverlust in der Ansaugströmung und einer Verschlechterung des Füllungsgrades verbunden.

Eine sich verjüngende erste schmale Stirnseite des mindestens einen bandförmigen Heizelementes wirkt derartigen Ablagerungen entgegen. Querschnittsverengungen infolge von Ablagerungen oder gar Kanalblockaden, hervorgerufen durch auskondensierte Abgasbestandteile, sind nicht zu befürchten bzw. wird entgegen gewirkt.

Vorteilhaft sind Ausführungsformen der Brennkraftmaschine, bei denen der Querschnitt des mindestens einen bandförmigen Heizelementes bogenförmig ausgebildet ist, so dass das mindestens eine bandförmige Heizelement eine schaufelförmige Gestalt aufweist.

Eine bogenförmige Ausbildung des bandförmigen Heizelementes ist vorteilhaft hinsichtlich einer Verwendung der Heizvorrichtung als Leiteinrichtung. Zu berücksichtigen ist dabei, dass der Verteilerknotenpunkt in Bezug auf die mindestens zwei Zylinder in der Regel mittig angeordnet ist, die räumliche Ausdehnung des Knotenpunktes begrenzt ist und die vorerwärmte Luft daher auf dem Weg zu den Zylindern nahezu bei jeder Ausführungsform der Brennkraftmaschine mehr oder weniger stark umzulenken ist.

Die schaufelförmige Gestalt des mindestens einen bandförmigen Heizelementes gestattet eine verlustfreie bzw. druckverlustarme Umlenkung der angesaugten Verbrennungsluft und eine gleichmäßige Verteilung der Luft auf die einzelnen Zylinder.

Vorteilhaft sind Ausführungsformen der Brennkraftmaschine, bei denen die Heizvorrichtung mindestens zwei bandförmige Heizelemente aufweist, die zueinander beabstandet angeordnet sind.

Mit der Anzahl der Heizelemente nimmt auch die wärmeübertragende Fläche zu und damit die Wärmemenge, die auf die angesaugte Verbrennungsluft übertragbar ist. Der Anzahl an Heizelementen kommt hinsichtlich des Wärmeübergangs eine nicht zu vernachlässigende Bedeutung zu, da die Strömungsgeschwindigkeiten in der Gesamtansaugleitung hoch sind und die Temperatur der Heizelemente und damit die Temperaturdifferenz zwischen den Heizelementen und der Luft nicht beliebig erhöht werden kann, um den Wärmeübergang zu steigern.

Die Ausbildung der Heizvorrichtung als Leiteinrichtung wird ebenfalls erleichtert, wenn mehrere Heizelemente vorgesehen werden und zur Beeinflussung der Strömung verwendet werden können.

Bei Brennkraftmaschinen mit mindestens zwei bandförmigen Heizelementen, die im Wesentlichen vertikal quer zu einer Parallelen der Längsachse des mindestens einen Zylinderkopfes ausgerichtet sind, haben sich Ausführungsformen als vorteilhaft erwiesen, die dadurch gekennzeichnet sind, dass mindestens zwei bandförmige Heizelemente in einem spitzen Winkel zueinander angestellt sind. Eine derartige Anordnung der Heizelemente fächert den vorerwärmten Luftstrom auf, wodurch dieser auf die Zylinder verteilt wird.

Bei der vorstehend genannten Art von Brennkraftmaschine, bei der die mindestens zwei bandförmigen Heizelemente im Wesentlichen vertikal ausgerichtet sind, sind des Weiteren Ausführungsformen vorteilhaft, bei denen mindestens zwei bandförmige Heizelemente eine schaufelförmige Gestalt aufweisen, wobei die konkave Seite nach außen gewandt ist.

Nach außen gewandt bedeutet in diesem Zusammenhang, dass die konkave, d. h. die nach innen gewölbte Seite der Wandung der Gesamtansaugleitung bzw. dem die Heizelemente aufnehmenden Flansch der Heizvorrichtung zugewandt und vom mittleren Stromfaden der Verbrennungsluftströmung abgewandt ist. Dabei öffnen sich die mindestens zwei Heizelemente vorzugsweise trichterähnlich.

Vorteilhaft sind Ausführungsformen der Brennkraftmaschine, bei denen das mindestens eine Heizelement von einem Flansch aufgenommen wird. Diese Ausführungsform gestattet es, die Heizvorrichtung als vormontierte Baugruppe bereitzustellen und Heizvorrichtungen gleicher Bauart in unterschiedlichen Brennkraftmaschinen einzusetzen. Dies erhöht die Stückzahl und senkt damit die Stückkosten. Zudem wird der Austausch einer defekten Heizvorrichtung erleichtert.

Vorteilhaft sind aber auch Ausführungsformen der Brennkraftmaschine, bei denen die Gesamtansaugleitung das mindestens eine Heizelement aufnimmt, d. h. den Flansch als Aufnahme ersetzt.

Vorteilhaft sind Ausführungsformen der Brennkraftmaschine, bei denen ein Ladeluftkühler vorgesehen ist, der mit einer Bypaßleitung ausgestattet ist, die stromaufwärts der Heizvorrichtung in die Gesamtansaugleitung mündet.

Der Ladeluftkühler senkt die Lufttemperatur und steigert damit die Dichte der Luft, wodurch auch der Kühler zu einer besseren Füllung der Zylinder mit Luft, d. h. zu einer größeren Luftmasse beiträgt. Die Ausstattung des Ladeluftkühlers mit einer Bypaßleitung zwecks Umgehung des Kühlers erweist sich insbesondere nach einem Kaltstart der Brennkraftmaschine bzw. während der Warmlaufphase oder einem Schubbetrieb als vorteilhaft. Eine Kühlung der angesaugten Luft in diesen Betriebszuständen würde dem Erwärmen in der Heizvorrichtung entgegen stehen, d. h. zuwiderlaufen.

Vorteilhaft sind Ausführungsformen der Brennkraftmaschine, bei denen eine externe Abgasrückführung vorgesehen ist, die mit einer Rückführleitung ausgestattet ist, die stromaufwärts der Heizvorrichtung in die Gesamtansaugleitung mündet.

Die Rückführung von Verbrennungsgasen von der Abgasseite in den Ansaugbereich wird als zielführend angesehen, um zukünftige Grenzwerte für Stickoxidemissionen einzuhalten, wobei hohe Abgasrückführraten, die in der Größenordnung von X_{AGR} ≈ 60% bis 70% liegen können, erforderlich sind, um eine deutliche Senkung der Stickoxidemissionen zu erreichen.

Die Rückführrate X_{AGR} bestimmt sich dabei zu X_{AGR} = m_{AGR} / (m_{AGR} + m_{Frischluft}), wobei m_{AGR} die Masse an zurückgeführtem Abgas und m_{Frischluft} die zugeführte Frischluft bezeichnet.

In der Abgasrückführleitung ist häufig eine Kühlvorrichtung vorgesehen, mit der die Temperatur im heißen Abgasstrom gesenkt wird, wodurch die Dichte der Abgase erhöht wird. Die Temperatur der Verbrennungsluft, die sich bei der Mischung der Frischluft mit den rückgeführten Abgasen einstellt, wird hierdurch ebenfalls gesenkt, weshalb auch die Kühlvorrichtung der Abgasrückführung zu einer besseren Füllung der Zylinder beiträgt. In der Regel wird eine Flüssigkeitskühlung verwendet. Gegebenenfalls ist es vorteilhaft, diese Kühlvorrichtung - wie den Ladeluftkühler - mit einer Bypaßleitung auszustatten.

In die Gesamtansaugleitung eingeleitete Gasströme erzeugen Turbulenzen. Mündet die Bypaßleitung eines Ladeluftkühlers und/oder die Rückführleitung einer Abgasrückführung stromaufwärts der Heizvorrichtung in die Gesamtansaugleitung, sorgt die stromabwärts angeordnete Heizvorrichtung auch für eine Beruhigung der Verbrennungsluftströmung.

Vorteilhaft sind Ausführungsformen der Brennkraftmaschine, bei denen eine Aufladung vorgesehen ist.

Die Aufladung dient in erster Linie der Leistungssteigerung der Brennkraftmaschine. Die Aufladung ist aber auch ein geeignetes Mittel, bei gleicher Leistung den Hubraum zu reduzieren, wodurch sich - bei gleichen Fahrzeugrandbedingungen - das Lastkollektiv zu höheren Lasten hin verschieben läßt, wo der spezifische Kraftstoffverbrauch niedriger ist.

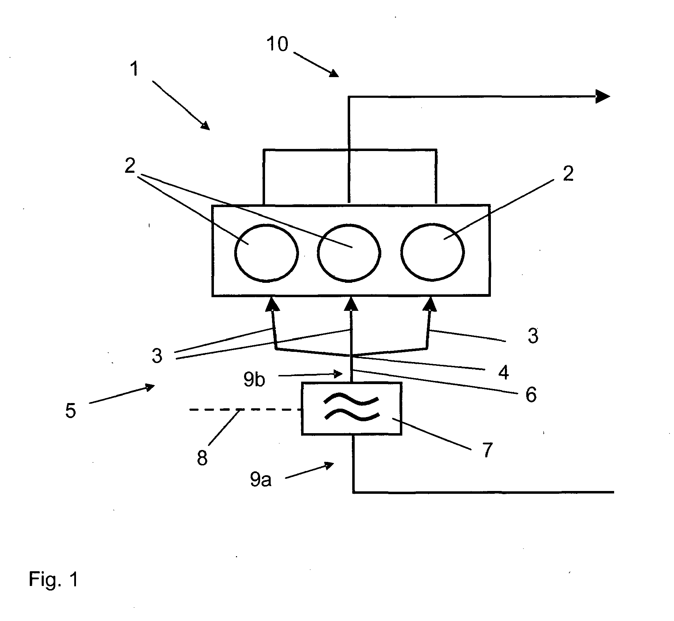

Im Folgenden wird die Erfindung anhand eines Ausführungsbeispiels gemäß Figur 1 näher beschrieben. Hierbei zeigt:
- Fig.1: schematisch eine erste Ausführungsform der Brennkraftmaschine.

Figur 1 zeigt schematisch eine erste Ausführungsform der Brennkraftmaschine 1, die drei in Reihe angeordnete Zylinder 2 umfaßt. Es handelt sich somit um einen Drei-Zylinder-Reihenmotor.

Die Zylinder 2 der Brennkraftmaschine 1 werden im Einlaßbereich 5 via Gesamtansaugleitung 6 mit Frischluft bzw. Verbrennungsluft 9a versorgt. In der Gesamtansaugleitung 6 ist eine Heizvorrichtung 7 zur Erwärmung der Verbrennungsluft 9a angeordnet. Die Heizvorrichtung 7 selbst ist elektrisch beheizbar, wozu ein elektrischer Anschluß 8 vorgesehen ist.

Stromabwärts der Heizvorrichtung 7 gabelt sich die Gesamtansaugleitung 6 unter Ausbildung eines Verteilerknotenpunktes 4 in drei Ansaugleitungen 3, die zu den drei Zylindern 2 führen.

Die via Gesamtansaugleitung 6 angesaugte Verbrennungsluft 9a wird beim Durchströmen der aktivierten Heizvorrichtung 7 erwärmt. Die erwärmte Verbrennungsluft 9b wird anschließend, d. h. stromabwärts der Heizvorrichtung 7, am Verteilerknotenpunkt 4 auf die einzelnen Zylinder 2 verteilt. Die Verbrennungsgase werden via Abgasabführsystem 10 aus den Zylindern 2 abgeführt.

### Bezugszeichen

- 1: Brennkraftmaschine
- 2: Zylinder
- 3: Ansaugleitung
- 4: Verteilerknotenpunkt
- 5: Einlaßbereich, Ansaugbereich
- 6: Gesamtansaugleitung
- 7: Heizvorrichtung
- 8: elektrischer Anschluß
- 9a: angesaugte Verbrennungsluft
- 9b: erwärmte Verbrennungsluft
- 10: Abgasabführsystem

- Δ: Abstand zwischen der Heizvorrichtung und dem Verteilerknotenpunkt
- d: Durchmesser eines Zylinders
- m_{AGR}: Masse an zurückgeführtem Abgas
- M_{Frischluft}: Frischluftmasse
- X_{AGR}: Abgasrückführrate

## Patentansprüche

1. Verfahren zum Betreiben einer Brennkraftmaschine (1) mit mindestens einem Zylinderkopf und mindestens zwei Zylindern (2), bei der jeder Zylinder (2) mindestens eine Einlaßöffnung zum Zuführen von Verbrennungsluft (9a, 9b) in den Zylinder (2) aufweist, wobei
- zu jeder Einlaßöffnung eine Ansaugleitung (3) führt,
- die Ansaugleitungen (3) von mindestens zwei Zylindern (2) zu einer Gesamtansaugleitung (6) zusammenführen, und
- in der Gesamtansaugleitung (6) eine Heizvorrichtung (7) zur Erwärmung der Verbrennungsluft (9a, 9b) angeordnet ist,
**dadurch gekennzeichnet, dass**
- die Heizvorrichtung (7) zur Erwärmung der Verbrennungsluft (9a, 9b) aktiviert wird, wenn die Kraftstoffzufuhr der Brennkraftmaschine (1) deaktiviert ist.

2. Verfahren nach Anspruch 1, **dadurch gekennzeichnet, dass** die Heizvorrichtung (7) zur Erwärmung der Verbrennungsluft (9a, 9b) aktiviert wird, wenn die Kraftstoffzufuhr der Brennkraftmaschine (1) für eine vorgebbare Zeitspanne Δ*t₁* deaktiviert ist.

3. Verfahren nach Anspruch 1 oder 2, **dadurch gekennzeichnet, dass** die Heizvorrichtung (7) zur Erwärmung der Verbrennungsluft (9a, 9b) elektrisch betrieben wird.

4. Verfahren nach einem der vorherigen Ansprüche, **dadurch gekennzeichnet, dass** die Heizvorrichtung (7) zur Erwärmung der Verbrennungsluft (9a, 9b) mit im Schubbetrieb der Brennkraftmaschine (1) zurückgewonnener Energie betrieben wird.

5. Brennkraftmaschine (1) zur Durchführung eines Verfahrens nach einem der vorherigen Ansprüche mit mindestens einem Zylinderkopf und mindestens zwei Zylindern (2), bei der jeder Zylinder (2) mindestens eine Einlaßöffnung zum Zuführen von Verbrennungsluft (9a, 9b) in den Zylinder (2) aufweist, wobei
- zu jeder Einlaßöffnung eine Ansaugleitung (3) führt,
- die Ansaugleitungen (3) von mindestens zwei Zylindern (2) zu einer Gesamtansaugleitung (6) zusammenführen, und
- in der Gesamtansaugleitung (6) eine Heizvorrichtung (7) angeordnet ist.

6. Brennkraftmaschine (1) nach Anspruch 5, **dadurch gekennzeichnet, dass**
- die Ansaugleitungen (3) von mindestens zwei Zylindern (2) unter Ausbildung eines Verteilerknotenpunktes (4) zu einer Gesamtansaugleitung (6) zusammenführen, und
- die Heizvorrichtung (7) benachbart zu dem Verteilerknotenpunkt (4) angeordnet ist, in dem die Ansaugleitungen (3) zu der Gesamtansaugleitung (6) zusammenführen, wobei der Abstand Δ zwischen der Heizvorrichtung (7) und dem Verteilerknotenpunkt (4) kleiner ist als der Durchmesser d eines Zylinders (2) mit Δ < d.

7. Brennkraftmaschine (1) nach Anspruch 6, **dadurch gekennzeichnet, dass** der Abstand Δ zwischen der Heizvorrichtung (7) und dem Verteilerknotenpunkt (4) kleiner ist als der halbe Durchmesser d eines Zylinders (2) mit Δ < 0.5d.

8. Brennkraftmaschine (1) nach Anspruch 6 oder 7, **dadurch gekennzeichnet, dass** der Abstand Δ zwischen der Heizvorrichtung (7) und dem Verteilerknotenpunkt (4) kleiner ist als ein Viertel des Durchmesser d eines Zylinders (2) mit Δ < 0.25*d*.

9. Brennkraftmaschine (1) nach einem der Ansprüche 5 bis 8, **dadurch gekennzeichnet, dass**
- die Heizvorrichtung (7) mindestens ein bandförmiges Heizelement aufweist, welches mit einer ersten schmalen Seite des Querschnitts der angesaugten Verbrennungsluftströmung (9a, 9b) zugewandt ist.

10. Brennkraftmaschine (1) nach Anspruch 9, bei der die mindestens zwei Zylinder (2) entlang der Längsachse des mindestens einen Zylinderkopfes in Reihe angeordnet sind, **dadurch gekennzeichnet, dass** das mindestens eine bandförmige Heizelement im Wesentlichen horizontal entlang einer Parallelen zur Längsachse des mindestens einen Zylinderkopfes ausgerichtet ist.

11. Brennkraftmaschine (1) nach Anspruch 9, bei der die mindestens zwei Zylinder (2) entlang der Längsachse des mindestens einen Zylinderkopfes in Reihe angeordnet sind, **dadurch gekennzeichnet, dass** das mindestens eine bandförmige Heizelement im Wesentlichen vertikal quer zu einer Parallelen der Längsachse des mindestens einen Zylinderkopfes ausgerichtet ist.

12. Brennkraftmaschine (1) nach einem der Ansprüche 9 bis 11, **dadurch gekennzeichnet, dass** sich eine erste schmale Stirnseite des mindestens einen bandförmigen Heizelementes, die der angesaugten Verbrennungsluftströmung (9a, 9b) zugewandt ist, verjüngt.

13. Brennkraftmaschine (1) nach einem der Ansprüche 9 bis 12, **dadurch gekennzeichnet, dass** der Querschnitt des mindestens einen bandförmigen Heizelements bogenförmig ausgebildet ist, so dass das mindestens eine bandförmige Heizelement eine schaufelförmige Gestalt aufweist.

14. Brennkraftmaschine (1) nach einem der Ansprüche 5 bis 13, **dadurch gekennzeichnet, dass** die Heizvorrichtung (7) mindestens zwei bandförmige Heizelemente aufweist, die zueinander beabstandet angeordnet sind.

15. Brennkraftmaschine (1) nach Anspruch 14, bei der die mindestens zwei bandförmigen Heizelemente im Wesentlichen vertikal quer zu einer Parallelen der Längsachse des mindestens einen Zylinderkopfes ausgerichtet sind, **dadurch gekennzeichnet, dass** mindestens zwei bandförmige Heizelemente in einem spitzen Winkel zueinander angestellt sind.

## Claims

1. Method for operating an internal combustion engine (1) having at least one cylinder head and at least two cylinders (2), in which each cylinder (2) has at least one inlet opening for the supply of combustion air (9a, 9b) into the cylinder (2), in which internal combustion engine
- an intake line (3) leads to each inlet opening,
- the intake lines (3) of at least two cylinders (2) merge to form an overall intake line (6), and
- there is arranged in the overall intake line (6) a heating device (7) for heating the combustion air (9a, 9b),
**characterized in that**
- the heating device (7) for heating the combustion air (9a, 9b) is activated when the fuel supply of the internal combustion engine (1) is deactivated.

2. Method according to Claim 1, **characterized in that** the heating device (7) for heating the combustion air (9a, 9b) is activated when the fuel supply to the internal combustion engine (1) is deactivated for a predefinable time period Δ*t₁*.

3. Method according to Claim 1 or 2, **characterized in that** the heating device (7) for heating the combustion air (9a, 9b) is electrically operated.

4. Method according to one of the preceding claims, **characterized in that** the heating device (7) for heating the combustion air (9a, 9b) is operated with energy recovered in the overrun mode of the internal combustion engine (1).

5. Internal combustion engine (1) for carrying out a method according to one of the preceding claims, having at least one cylinder head and at least two cylinders (2), in which each cylinder (2) has at least one inlet opening for the supply of combustion air (9a, 9b) into the cylinder (2), in which internal combustion engine
- an intake line (3) leads to each inlet opening,
- the intake lines (3) of at least two cylinders (2) merge to form an overall intake line (6), and
- there is arranged in the overall intake line (6) a heating device (7).

6. Internal combustion engine (1) according to Claim 5, **characterized in that**
- the intake lines (3) of at least two cylinders (2) merge to form an overall intake line (6) such that a distributor junction point (4) is formed, and
- the heating device (7) is arranged adjacent to the distributor junction point (4) at which the intake lines (3) merge to form the overall intake line (6), the spacing Δ between the heating device (7) and the distributor junction point (4) being smaller than the diameter d of a cylinder (2), Δ < d.

7. Internal combustion engine (1) according to Claim 6, **characterized in that** the spacing Δ between the heating device (7) and the distributor junction point (4) is smaller than one half of the diameter d of a cylinder (2), Δ < 0.5d.

8. Internal combustion engine (1) according to Claim 6 or 7, **characterized in that** the spacing Δ between the heating device (7) and the distributor junction point (4) is smaller than one quarter of the diameter d of a cylinder (2), Δ < 0.25d.

9. Internal combustion engine (1) according to one of Claims 5 to 8, **characterized in that**
- the heating device (7) has at least one strip-like heating element, a first narrow side of the cross section of which faces toward the intake combustion air flow (9a, 9b).

10. Internal combustion engine (1) according to Claim 9, in which the at least two cylinders (2) are arranged in series along the longitudinal axis of the at least one cylinder head, **characterized in that** the at least one strip-like heating element is aligned substantially horizontally along a line parallel to the longitudinal axis of the at least one cylinder head.

11. Internal combustion engine (1) according to Claim 9, in which the at least two cylinders (2) are arranged in series along the longitudinal axis of the at least one cylinder head, **characterized in that** the at least one strip-like heating element is aligned substantially vertically, perpendicular to a line parallel to the longitudinal axis of the at least one cylinder head.

12. Internal combustion engine (1) according to one of Claims 9 to 11, **characterized in that** a first narrow end side, which faces toward the intake combustion air flow (9a, 9b), of the at least one strip-like heating element tapers.

13. Internal combustion engine (1) according to one of Claims 9 to 12, **characterized in that** the cross section of the at least one strip-like heating element is of arc-shaped design, such that the at least one strip-like heating element has a blade-like form.

14. Internal combustion engine (1) according to one of Claims 5 to 13, **characterized in that** the heating device (7) has at least two strip-like heating elements which are arranged spaced apart from one another.

15. Internal combustion engine (1) according to Claim 14, in which the at least two strip-like heating elements are aligned substantially vertically, perpendicular to a line parallel to the longitudinal axis of the at least one cylinder head, **characterized in that** at least two strip-like heating elements are set at an acute angle with respect to one another.

## Revendications

1. Procédé pour faire fonctionner un moteur à combustion interne (1) comprenant au moins une culasse et au moins deux cylindres (2), dans lequel chaque cylindre (2) présente au moins une ouverture d'entrée pour l'alimentation d'air comburant (9a, 9b) dans le cylindre (2),
- une conduite d'admission (3) conduisant à chaque ouverture d'entrée,
- les conduites d'admission (3) d'au moins deux cylindres (2) se réunissant en une conduite d'admission commune (6), et
- un dispositif de chauffage (7) pour réchauffer l'air comburant (9a, 9b) étant disposé dans la conduite d'admission commune (6),
**caractérisé en ce que**
- le dispositif de chauffage (7) est activé pour réchauffer l'air comburant (9a, 9b) lorsque l'alimentation en carburant du moteur à combustion interne (1) est désactivée.

2. Procédé selon la revendication 1, **caractérisé en ce que** le dispositif de chauffage (7) pour réchauffer l'air comburant (9a, 9b) est activé lorsque l'alimentation en carburant du moteur à combustion interne (1) est désactivée pendant un intervalle de temps prédéfinissable Δ*t₁*.

3. Procédé selon la revendication 1 ou 2, **caractérisé en ce que** le dispositif de chauffage (7) pour réchauffer l'air comburant (9a, 9b) est commandé électriquement.

4. Procédé selon l'une quelconque des revendications précédentes, **caractérisé en ce que** le dispositif de chauffage (7) pour réchauffer l'air comburant (9a, 9b) est commandé avec une énergie récupérée pendant le mode de poussée du moteur à combustion interne (1).

5. Moteur à combustion interne (1) pour mettre en oeuvre un procédé selon l'une quelconque des revendications précédentes, comprenant au moins une culasse et au moins deux cylindres (2), chaque cylindre (2) présentant au moins une ouverture d'entrée pour l'alimentation en air comburant (9a, 9b) dans le cylindre (2),
- une conduite d'admission (3) conduisant à chaque ouverture d'entrée,
- les conduites d'admission (3) d'au moins deux cylindres (2) se réunissant en une conduite d'admission commune (6), et
- un dispositif de chauffage (7) étant disposé dans la conduite d'admission commune (6).

6. Moteur à combustion interne (1) selon la revendication 5, **caractérisé en ce que**
- les conduites d'admission (3) d'au moins deux cylindres (2) se réunissent en formant un noeud de distribution (4) en une conduite d'admission commune (6), et
- le dispositif de chauffage (7) est disposé à proximité du noeud de distribution (4), dans lequel les conduites d'admission (3) se réunissent en la conduite d'admission commune (6), la distance Δ entre le dispositif de chauffage (7) et le noeud de distribution (4) étant inférieure au diamètre d d'un cylindre (2) avec Δ < d.

7. Moteur à combustion interne (1) selon la revendication 6, **caractérisé en ce que** la distance Δ entre le dispositif de chauffage (7) et le noeud de distribution (4) est inférieure au demi-diamètre d d'un cylindre (2) avec Δ < 0,5d.

8. Moteur à combustion interne (1) selon la revendication 6 ou 7, **caractérisé en ce que** la distance Δ entre le dispositif de chauffage (7) et le noeud de distribution (4) est inférieure à un quart du diamètre d d'un cylindre (2) avec Δ < 0,25d.

9. Moteur à combustion interne (1) selon l'une quelconque des revendications 5 à 8, **caractérisé en ce que**
- le dispositif de chauffage (7) présente au moins un élément chauffant en forme de bande qui est tourné avec un premier côté étroit de la section transversale vers l'écoulement d'air comburant admis (9a, 9b).

10. Moteur à combustion interne (1) selon la revendication 9, dans lequel les au moins deux cylindres (2) sont disposés en série le long de l'axe longitudinal de l'au moins une culasse, **caractérisé en ce que** l'au moins un élément chauffant en forme de bande est orienté essentiellement horizontalement le long d'une parallèle à l'axe longitudinal de l'au moins une culasse.

11. Moteur à combustion interne (1) selon la revendication 9, dans lequel les au moins deux cylindres (2) sont disposés en série le long de l'axe longitudinal de l'au moins une culasse, **caractérisé en ce que** l'au moins un élément chauffant en forme de bande est orienté essentiellement verticalement transversalement à une parallèle à l'axe longitudinal de l'au moins une culasse.

12. Moteur à combustion interne (1) selon l'une quelconque des revendications 9 à 11, **caractérisé en ce qu'**un premier côté frontal étroit de l'au moins un élément chauffant en forme de bande qui est tourné vers l'écoulement d'air comburant admis (9a, 9b) se rétrécit.

13. Moteur à combustion interne (1) selon l'une quelconque des revendications 9 à 12, **caractérisé en ce que** la section transversale de l'au moins un élément chauffant en forme de bande est réalisée sous forme courbe, de telle sorte que l'au moins un élément chauffant en forme de bande présente une configuration en forme de pale.

14. Moteur à combustion interne (1) selon l'une quelconque des revendications 5 à 13, **caractérisé en ce que** le dispositif de chauffage (7) présente au moins deux éléments chauffants en forme de bande qui sont disposés à distance l'un de l'autre.

15. Moteur à combustion interne (1) selon la revendication 14, dans lequel les au moins deux éléments chauffants en forme de bande sont orientés essentiellement verticalement transversalement à une parallèle à l'axe longitudinal de l'au moins une culasse, **caractérisé en ce qu'**au moins deux éléments chauffants en forme de bande sont inclinés l'un par rapport à l'autre suivant un angle aigu.
